# EUROPEAN PATENT APPLICATION

(11) **EP 4 734 203 A1**
(43) Date of publication of application: **29.04.2026**
(21) Application number: 23942307.2
(22) Date of filing: 20.06.2023
(51) Int. Cl.: H01M 10/052, H01M 4/66, H01M 10/0585, H01M 50/105, H01M 50/184, H01M 50/186, H01M 50/536, H01M 50/54, H01M 50/548, H01M 50/55, H01M 50/591

(54) **LITHIUM SECONDARY BATTERY**

(71) Applicant: TERAWATT TECHNOLOGY K.K., Yokohama-shi, Kanagawa 226-0026 (JP)
(72) Inventor: MIYAKE, Minoru, Yokohama-shi, Kanagawa 226-0026 (JP); OYAMA, Gosuke, Yokohama-shi, Kanagawa 226-0026 (JP); OGATA, Ken, Yokohama-shi, Kanagawa 226-0026 (JP)
(74) Representative: FRKelly
(86) International application number: PCT/JP2023/022782
(87) International publication number: WO 2024/261870

(57) **Abstract**

There is provided a lithium secondary battery including: a laminate in which a plurality of positive electrodes and a plurality of negative electrodes are laminated in a lamination direction, a separator being interposed between the positive electrode and the negative electrode, one of the positive electrode and the negative electrode including a first current collector, the first current collector comprising a pair of conductive layers and a resin layer, the pair of conductive layers sandwiching the resin layer, the first current collector including a first end part, the first end part extending in a first direction different from the lamination direction; a first electrode tab electrically connected to the first end part, the first electrode tab including a first bonding mark and a first insulating part, the first bonding mark being formed by bonding to the first end part, the first insulating part being disposed apart from the first bonding mark in the first direction, the first insulating part being covered with an insulating material; and a sealed container including a sealing part, the sealed container being configured, while enclosing the laminate inside the sealing part, to sandwich the first insulating part of the first electrode tab at the sealing part and to allow a part of the first electrode tab to be taken out to an outside of the sealed container.

## Description

### Technical Field

An exemplary embodiment according to the present disclosure relates to a lithium secondary battery.

### Background Art

Patent Literature 1 discloses that the safety of a battery cell is improved by using a current collector in which a metal layer is formed on both surfaces of a resin film. In the resin film, the front and back of the film are separated by a resin layer having insulating properties, and thus electrical conduction cannot be obtained. Therefore, in a case of connecting an electrode tab for leading out a wiring line and an electrode film, conduction cannot be obtained between the front and back of the electrode and between a plurality of the electrodes and a plurality of the electrode tabs. In this regard, Patent Literature 2 discloses that a plurality of current collectors is folded and then laminated on each metal layer in order to connect each metal layer separated by a resin layer to an electrode tab for leading out a wiring line.

### Citation List

### Patent Literatures

Patent Literature 1: Japanese Patent Application Laid-Open No. H11-102711
Patent Literature 2: Japanese Patent Application Laid-Open No. 2013-016321

### Summary of Invention

### Technical Problem

The present disclosure provides a technique for suppressing a decrease in output characteristics and productivity of a lithium secondary battery.

### Solution to Problem

In one exemplary embodiment of the present disclosure, there is provided a lithium secondary battery including: a laminate in which a plurality of positive electrodes and a plurality of negative electrodes are laminated in a lamination direction, a separator being interposed between the positive electrode and the negative electrode, one of the positive electrode and the negative electrode including a first current collector, the first current collector comprising a pair of conductive layers and a resin layer, the pair of conductive layers sandwiching the resin layer, the first current collector including a first end part, the first end part extending in a first direction different from the lamination direction; a first electrode tab electrically connected to the first end part, the first electrode tab including a first bonding mark and a first insulating part, the first bonding mark being formed by bonding to the first end part, the first insulating part being disposed apart from the first bonding mark in the first direction, the first insulating part being covered with an insulating material; and a sealed container including a sealing part, the sealed container being configured, while enclosing the laminate inside the sealing part, to sandwich the first insulating part of the first electrode tab at the sealing part and to allow a part of the first electrode tab to be taken out to an outside of the sealed container.

### Advantageous Effect of Invention

According to one exemplary embodiment of the present disclosure, it is possible to provide a technique for suppressing a decrease in output characteristics and productivity of a lithium secondary battery.

### Brief Description of Drawings

[Figure 1] Figure 1 is a plan view for an explanatory description of a configuration example of a secondary battery 1.
[Figure 2] Figure 2 is an exploded perspective view for an explanatory description of a configuration example of a laminate ST.
[Figure 3] Figure 3 is a perspective view illustrating an example of a negative electrode 10.
[Figure 4] Figure 4 is a perspective view illustrating an example of a positive electrode 30.
[Figure 5] Figure 5 is a view for an explanatory description of a bonding state of a negative electrode tab 40, a negative electrode end part P, and a metal sheet M1.
[Figure 6] Figure 6 is a view illustrating a cross section of a first bonding mark W1.
[Figure 7] Figure 7 is a flowchart illustrating an example of the present manufacturing method.
[Figure 8A] Figure 8A is a view for an explanatory description of a step ST1.
[Figure 8B] Figure 8B is a view for an explanatory description of the step ST1.
[Figure 9A] Figure 9A is a view for an explanatory description of a step ST2.
[Figure 9B] Figure 9B is a view for an explanatory description of the step ST2.
[Figure 9C] Figure 9C is a view for an explanatory description of the step ST2.
[Figure 9D] Figure 9D is a view for an explanatory description of the step ST2.
[Figure 10] Figure 10 is a view for an explanatory description of a step ST3.
[Figure 11A] Figure 11A is a perspective view illustrating another example of the negative electrode 10.
[Figure 11B] Figure 11B is a perspective view illustrating another example of the negative electrode 10.
[Figure 11C] Figure 11C is a perspective view illustrating another example of the negative electrode 10.
[Figure 12] Figure 12 is a perspective view illustrating another example of the positive electrode 30.
[Figure 13] Figure 13 is a perspective view for an explanatory description of another lamination example of the negative electrode 10.
[Figure 14] Figure 14 is a perspective view for an explanatory description of another lamination example of the negative electrode 10.
[Figure 15] Figure 15 is a view illustrating the results of Experiment 1.
[Figure 16A] Figure 16A is an example of a case where the metal material has protruded in Experiment 1.
[Figure 16B] Figure 16B is an example of a case where the metal material has not protruded in Experiment 1.
[Figure 17] Figure 17 is a view illustrating the results of Experiment 2.

### Description of Embodiments

Hereinafter, each embodiment according to the present disclosure will be described.

In one exemplary embodiment, there is provided a lithium secondary battery including: a laminate in which a plurality of positive electrodes and a plurality of negative electrodes are laminated in a lamination direction, a separator being interposed between the positive electrode and the negative electrode, one of the positive electrode and the negative electrode including a first current collector, the first current collector comprising a pair of conductive layers and a resin layer, the pair of conductive layers sandwiching the resin layer, the first current collector including a first end part, the first end part extending in a first direction different from the lamination direction; a first electrode tab electrically connected to the first end part, the first electrode tab including a first bonding mark and a first insulating part, the first bonding mark being formed by bonding to the first end part, the first insulating part being disposed apart from the first bonding mark in the first direction, the first insulating part being covered with an insulating material; and a sealed container including a sealing part, the sealed container being configured, while enclosing the laminate inside the sealing part, to sandwich the first insulating part of the first electrode tab at the sealing part and to allow a part of the first electrode tab to be taken out to an outside of the sealed container.

In one exemplary embodiment, the first bonding mark in the first end part is provided 2 mm or more inward from an outer edge of the first end part in the first direction.

In one exemplary embodiment, the first bonding mark in the first end part is provided 2.5 mm or more inward from an outer edge of the first end part in the first direction.

In one exemplary embodiment, in a case where a total number of the first current collectors included in the laminate is denoted as X and a distance between the first bonding mark in the first end part and an outer edge of the first end part in the first direction is denoted as Y, a relationship of Y > 0.048X + 1.3 is satisfied.

In one exemplary embodiment, X is 10 or more.

In one exemplary embodiment, the first bonding mark is a welding mark.

In one exemplary embodiment, the first bonding mark includes a region in which the pair of conductive layers are integrated with each other in a cross section in the lamination direction.

In one exemplary embodiment, the first end part and the first electrode tab are bonded to each other with a metal sheet being interposed between the first end part and the first electrode tab.

In one exemplary embodiment, the first bonding mark is a welding mark.

In one exemplary embodiment, the first bonding mark includes a region in which the pair of conductive layers and the metal sheet are integrated in a cross section in the lamination direction.

In one exemplary embodiment, the first end part has a preliminary bonding mark formed by bonding to the metal sheet, and the preliminary bonding mark is provided at a position different from the first bonding mark in a case of being viewed from the lamination direction.

In one exemplary embodiment, the first current collector is a negative electrode current collector of the negative electrode, and the first electrode tab is a negative electrode tab that is connected to the negative electrode current collector.

In one exemplary embodiment, the sealed container is formed of an aluminum laminate film.

In one exemplary embodiment, the other of the positive electrode and the negative electrode includes a second current collector, the second current collector comprising a pair of conductive layers and a resin layer, the pair of conductive layers sandwiching the resin layer, the second current collector including a second end part, the second end part extending in a second direction different from the lamination direction.

In one exemplary embodiment, a second electrode tab electrically connected to the second end part is further provided, the second electrode tab including a second bonding mark and a second insulating part, the second bonding mark being formed by bonding to the second end part, the second insulating part being disposed apart from the second bonding mark in the second direction, the second insulating part being covered with an insulating material, and the sealed container is configured to sandwich the second insulating part of the second electrode tab at the sealing part and to allow a part of the second electrode tab to be taken out to the outside of the sealed container.

In one exemplary embodiment, the first direction and the second direction are the same direction.

In one exemplary embodiment, the first direction and the second direction are directions different from each other.

Hereinafter, each embodiment of the present disclosure will be described in detail with reference to the drawings. It is noted that in each drawing, the same or similar elements will be given the same reference numerals, and repeated descriptions will be omitted. Unless otherwise specified, a positional relationship such as up, down, left, and right will be described based on the positional relationship illustrated in the drawings. The dimensional ratio in the drawings does not indicate an actual ratio, and the actual ratio is not limited to the ratio illustrated in the drawings.

As described above, Patent Literature 2 proposes that a plurality of current collectors is folded and then laminated on each metal layer in order to connect each metal layer separated by a resin layer to an electrode tab for leading out a wiring line. However, this method requires a new device mechanism in which lamination is carried out while folding back the end part of the current collector for each metal layer. In addition, it is necessary to fold back the end part of the current collector in linkage with the lamination, and thus the productivity is significantly deteriorated. In addition, in this method, even in a case where the electrode tab, the current collector, and each metal layer can be mechanically bonded, the resistance of the bonding portion is increased, and the output characteristics are decreased. Such a problem may be solved in a lithium secondary battery 1 (hereinafter, also referred to as a "secondary battery 1") according to one embodiment.

### <Configuration example of secondary battery>

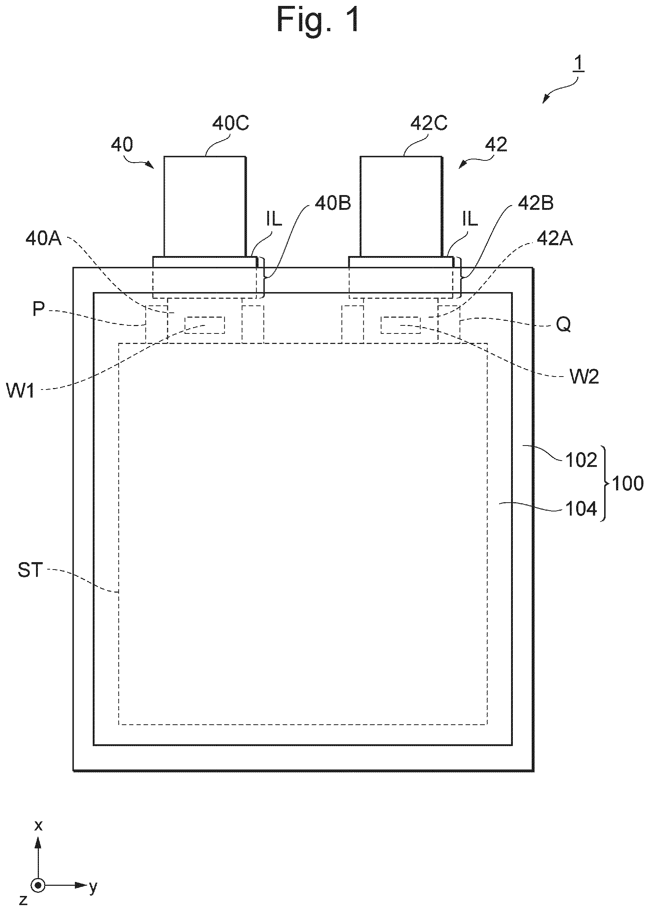

Figure 1 is a plan view for an explanatory description of a configuration example of a secondary battery 1. As illustrated in Figure 1, the secondary battery 1 is configured to include a sealed container 100, a laminate ST, a negative electrode tab 40, and a positive electrode tab 42. The laminate ST is configured to laminate a plurality of positive electrodes and a plurality of negative electrodes in a lamination direction (the z direction in Figure 1) with a separator being interposed therebetween.

The sealed container 100 includes a sealing part 102 and an accommodating part 104. The sealing part 102 is provided along the entire outer periphery of the sealed container 100 and isolates the accommodating part 104 from the outside of the sealed container 100.

The sealed container 100 is configured to allow the other end part 40C of the negative electrode tab 40 to be taken out to the outside of the sealed container 100 while sandwiching an insulating part 40B of the negative electrode tab 40 in the sealing part 102. Similarly, the sealed container 100 is configured to allow the other end part 42C of the positive electrode tab 42 to be taken out to the outside of the sealed container 100 while sandwiching an insulating part 42B of the positive electrode tab 42 in the sealing part 102.

The accommodating part 104 of the sealed container 100 provides a sealed space for accommodating the laminate ST. In one embodiment, the sealed container 100 may be constituted by superimposing a pair of sheet members with each other to bond the sheet members to each other over the outer periphery. The sheet member may be composed of a plurality of layers and may be, for example, an aluminum laminate film.

The negative electrode tab 40 is electrically connected to a negative electrode end part P of each negative electrode of the laminate ST. In one embodiment, the negative electrode tab 40 is a strip-shaped body that extends in a first direction (the x direction in Figure 1) different from the lamination direction of the laminate ST.

The negative electrode tab 40 may have one end part 40A, an insulating part 40B, and the other end part 40C along the first direction. The one end part 40A is bonded to the negative electrode end part P of each negative electrode of the laminate ST, and a first bonding mark W1 is formed by the bonding. The first bonding mark W1 may be one or a plurality of points (spots) or may be a continuous line or surface.

The insulating part 40B is covered with, for example, an insulating material IL such as a sealant film. The insulating part 40B is provided to be spaced apart from the first bonding mark W1 in the first direction by a predetermined distance or more. The other end part 40C extends from the insulating part 40B in the first direction and is disposed on the outside of the sealed container 100. The other end part 40C may be connected to an external circuit.

In one embodiment, the negative electrode tab 40 may be formed from at least one kind selected from the group consisting of Cu, Ni, Ti, and Fe, and a metal that does not react with Li, as well as an alloy thereof and stainless steel (SUS).

The positive electrode tab 42 is electrically connected to a positive electrode end part Q of each positive electrode of the laminate ST. In one embodiment, the positive electrode tab 42 is a strip-shaped body that extends in a second direction (in the example illustrated in Figure 1, the second direction is the same as the first direction, which is the x direction; however the present invention is not limited thereto, and the second direction may be a direction different from the first direction, for example, a direction opposite to the first direction) different from the lamination direction of the laminate ST. The positive electrode tab 42 may have one end part 42A, an insulating part 42B, and the other end part 42C along the second direction.

The one end part 42A is bonded to the positive electrode end part Q of each positive electrode of the laminate ST, and a second bonding mark W2 is formed by the bonding. The second bonding mark W2 may be one or a plurality of points (spots) or may be a continuous line or surface.

The insulating part 42B is covered with, for example, an insulating material IL such as a sealant film. The insulating part 42B is provided to be spaced apart from the second bonding mark W2 in the second direction by a predetermined distance or more. The other end part 42C extends from the insulating part 42B in the first direction and is disposed on the outside of the sealed container 100. The other end part 42C may be connected to an external circuit.

In one embodiment, the positive electrode tab 42 may be formed from at least one kind of material selected from the group consisting of aluminum, titanium, stainless steel, nickel, and an alloy thereof.

The laminate ST is disposed in the sealed space of the accommodating part 104. In one embodiment, the laminate ST may be disposed in the sealed container 100 together with the electrolyte solution. The electrolyte solution is a liquid containing a solvent and an electrolyte, and acts as a conductive path for lithium ions. It is noted that the electrolyte solution may be infiltrated into the separator of the laminate ST, and in addition, the electrolyte solution may be held by the polymer to constitute a polymer electrolyte or a gel electrolyte.

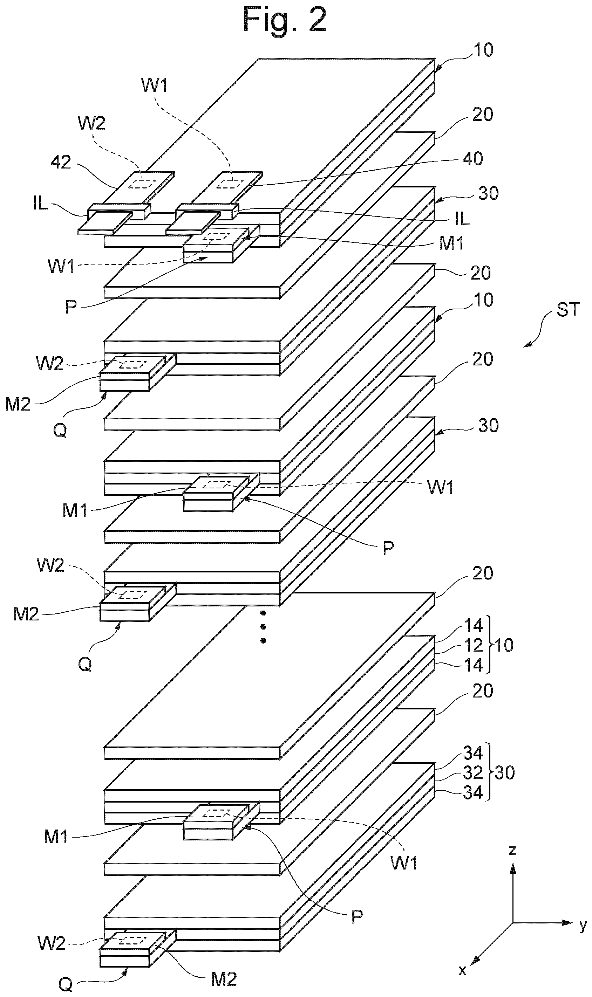

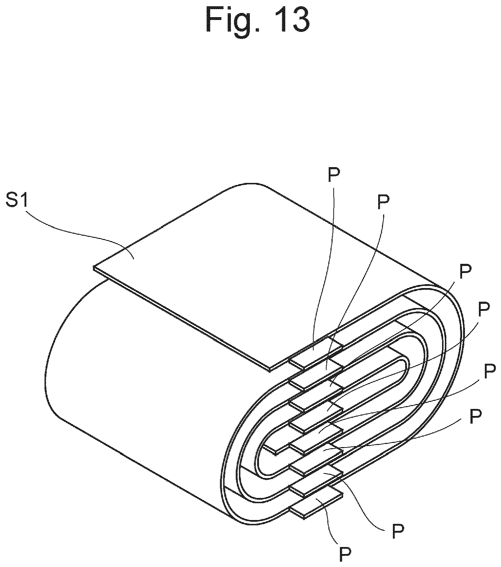

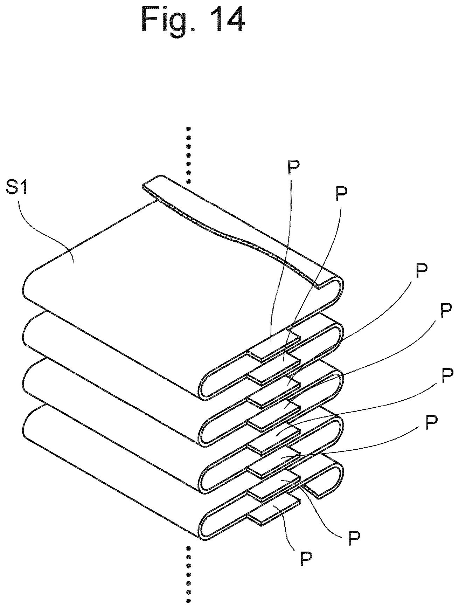

Hereinafter, a configuration example of the laminate ST will be described in detail with reference to Figure 2 to Figure 6. Figure 2 is an exploded perspective view for an explanatory description of a configuration example of a laminate ST. As illustrated in Figure 2, the laminate ST is configured to alternately laminate a plurality of negative electrodes 10 and positive electrodes 30 in a lamination direction (the z direction in Figure 2) with separator 20 being interposed therebetween. As illustrated in Figure 2, each of the plurality of negative electrodes 10 may be composed of one flat plate-shaped sheet. In addition, each of the plurality of positive electrodes 30 may be composed of one flat plate-shaped sheet. It is noted that the plurality of negative electrodes 10 and/or the plurality of positive electrodes 30 may be configured to fold or wind one flat plate-shaped sheet as a whole (an example of such an aspect will be described later with reference to Figure 13 and Figure 14).

In one embodiment, the number of laminations of the positive electrode and the number of laminations of the negative electrode in the laminate ST may be each 5 or more, 10 or more, or 20 or more. In one embodiment, the number of laminations of the positive electrode and the number of laminations of the negative electrode in the laminate ST may be each 50 or less, 40 or less, or 30 or less. The number of laminations of the positive electrode and the number of laminations of the negative electrode in the laminate ST may be appropriately set according to the energy density or the rated capacity of the secondary battery 1. Here, the energy density of the secondary battery 1 may be, for example, 300 Wh/kg or more. In addition, the rated capacity of the secondary battery 1 may be, for example, 1.5 Ah or more, or may be 5 Ah or more.

As illustrated in Figure 2, the negative electrode tab 40 is disposed to be lined up in the lamination direction with respect to the negative electrode end part P of each negative electrode 10. For example, the negative electrode tab 40 may be disposed above or below the negative electrode end part P in the lamination direction. In addition, for example, the negative electrode tab 40 may be disposed between a certain negative electrode end part P and a negative electrode end part P adjacent to the certain negative electrode end part P. Similarly, the positive electrode tab 42 is disposed to be lined up in the lamination direction with respect to the positive electrode end part Q of each positive electrode 30. For example, the positive electrode tab 42 may be disposed above or below the positive electrode end part Q in the lamination direction. In addition, for example, the positive electrode tab 42 may be disposed between a certain positive electrode end part Q and a positive electrode end part Q adjacent to the certain positive electrode end part Q.

As illustrated in Figure 2, the separator 20 is disposed between the negative electrode 10 and the positive electrode 30 in the lamination direction. The separator 20 physically and/or electrically isolates the negative electrode 10 and the positive electrode 30 from each other and also ensures the ion conductivity of lithium ions. In one embodiment, the separator 20 may be at least one kind selected from the group consisting of a porous member having insulating properties, a polymer electrolyte, a gel electrolyte, and an inorganic solid electrolyte. As the separator 20, one kind of member may be used alone, or two or more kinds of members may be used in combination.

### (Negative electrode 10)

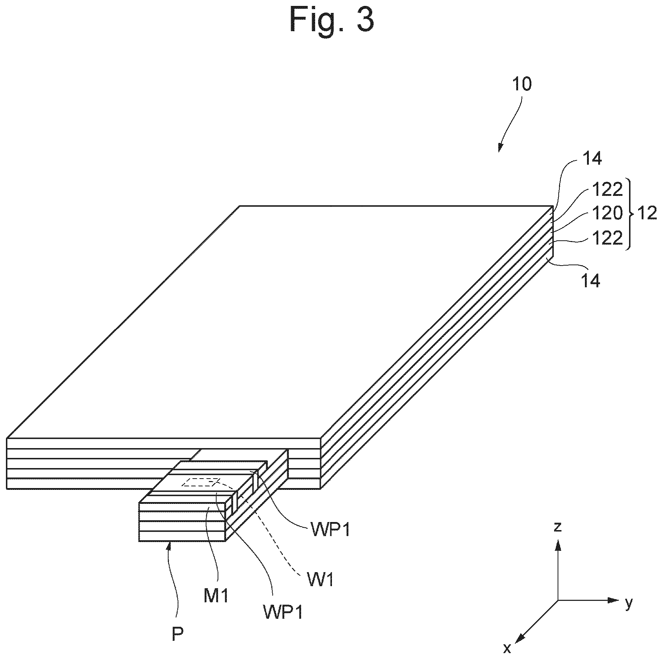

Figure 3 is a perspective view illustrating an example of the negative electrode 10. In one embodiment, the negative electrode 10 is configured to include a negative electrode current collector 12 and a negative electrode active material layer 14 disposed on the negative electrode current collector 12.

The negative electrode current collector 12 may be composed of a negative electrode insulating layer 120 and a pair of negative electrode conductive layers 122 that are disposed to sandwich the negative electrode insulating layer 120.

In one embodiment, the negative electrode insulating layer 120 may be formed of, for example, a sheet-shaped (film-shaped) or fibrous resin. The resin may be, for example, at least one of a polyolefin resin such as polyethylene terephthalate (PET), polyethylene, or polypropylene, or a thermoplastic resin such as polystyrene, polyvinyl chloride, or polyamide. The negative electrode insulating layer 120 may be configured to laminate at least one or more of the resins a plurality of times. In one embodiment, the negative electrode insulating layer 120 is formed from a material having a melting point of 150°C or higher and 300°C or lower. In one embodiment, the thickness of the negative electrode insulating layer 120 may be 3 µm or more and 10 µm or less, or may be 4 µm or more and 8 µm or less. In a case where the negative electrode current collector 12 includes the negative electrode insulating layer 120, the negative electrode 10 can be made lighter and the rigidity (thickness) thereof can be increased.

The negative electrode conductive layer 122 is formed on both surfaces of the negative electrode insulating layer 120 so that the negative electrode insulating layer 120 is sandwiched. The negative electrode conductive layer 122 is in physical and/or electrical contact with the negative electrode active material layer 14 and functions to transfer electrons to and from the negative electrode active material layer 14. In one embodiment, the negative electrode conductive layer 122 is formed from at least one kind selected from the group consisting of Cu, Ni, Ti, Fe, and a metal that does not react with Li, as well as an alloy thereof and stainless steel. Here, the "metal that does not react with Li" may be a metal that does not react with a lithium ion or a lithium metal to form an alloy in the operating state of the secondary battery 1. The negative electrode conductive layer 122 is Cu in one example. In one embodiment, the negative electrode conductive layer 122 is formed by subjecting the above-described material to vapor deposition, sputtering, electrolytic plating, or bonding on the surfaces of both sides of the negative electrode insulating layer 120. In one embodiment, the thickness of the negative electrode conductive layer 122 may be 0.5 µm or more and 5 µm or less, 0.7 µm or more and 3 µm or less, or 0.8 µm or more and 2.0 µm or less.

The negative electrode active material layers 14 may be disposed on each of both surfaces of the negative electrode current collector 12, or the negative electrode active material layers 14 may be disposed only on one surface of the negative electrode current collector 12. The negative electrode active material layer 14 contains a negative-electrode active material that causes an electrode reaction, that is, an oxidation reaction and a reduction reaction, in the negative electrode. The negative-electrode active material may contain, for example, lithium metal, an alloy containing lithium metal, a carbon-based substance, and a metal oxide, as well as a metal that is alloyed with lithium, an alloy containing the metal, and the like. The carbon-based substance may be, for example, graphene, graphite, hard carbon, a carbon nanotube, or the like. The metal oxide may be, for example, a titanium oxide-based compound, a cobalt oxide-based compound, or the like. The above-described metal to be alloyed with lithium may be, for example, silicon, silicon oxide, germanium, tin, lead, aluminum, and gallium, as well as metals obtained by pre-doping these with lithium.

As illustrated in Figure 3, the negative electrode current collector 12 has a negative electrode end part P. In one embodiment, the negative electrode end part P is constituted to extend from the side surface of the negative electrode current collector 12 in a first direction (in Figure 3, the x direction) different from the lamination direction as a part of the negative electrode current collector 12. The negative electrode active material layer 14 is not disposed on the negative electrode end part P.

In one embodiment, a metal sheet M1 for a negative electrode may be provided on the negative electrode end part P. The metal sheet M1 may be bonded to one surface of the negative electrode end part P as illustrated in Figure 3, or may be bonded to each of both surfaces of the negative electrode end part P. The metal sheet M1 may be provided only at the negative electrode end part P of a part of the negative electrode 10, or may be provided at the negative electrode end parts P of all the negative electrodes 10. The metal sheet M1 may be formed of the same material as the negative electrode conductive layer 122, and in one example, the material is Cu. In one embodiment, the thickness of the metal sheet M1 may be 3 µm or more, 5 µm or more, or 7 µm or more. In one embodiment, the thickness of the metal sheet M1 may be 15 µm or less, 12 µm or less, or 10 µm or less.

As illustrated in Figure 3, the first bonding mark W1 formed by bonding to the negative electrode tab 40 is formed on the metal sheet M1 and the negative electrode end part P. In addition, in one embodiment, a preliminary bonding mark WP1 formed by bonding the metal sheet M1 and the negative electrode end part P may be formed on the metal sheet M1 and the negative electrode end part P. The preliminary bonding mark WP1 is a bonding mark that is formed in a case where the metal sheet M1 and the negative electrode end part P are preliminarily bonded (hereinafter, also referred to as "preliminary bonding") before the bonding to the negative electrode tab 40. The first bonding mark W1 and the preliminary bonding mark WP1 can be formed at positions different from each other in a case of being viewed from the lamination direction (z direction). The preliminary bonding mark WP1 may be formed in one row or a plurality of rows in a line shape along the negative electrode end part P, or may be formed in a shape of a plurality of dots. It is noted that in a case where the metal sheet M1, the negative electrode end part P, and the negative electrode tab 40 are bonded at once without carrying out the preliminary bonding, only the first bonding mark W1 is formed, and the preliminary bonding mark WP1 is not formed.

In one embodiment, the first bonding mark W1 and/or the preliminary bonding mark WP1 may be a bonding mark by welding, that is, a welding mark. The welding may be, for example, ultrasonic welding, laser welding, resistance welding, or spot welding. The welding is, in one example, ultrasonic welding. In one embodiment, a part or the whole of the metal sheet M1 and the negative electrode conductive layer 122 of the negative electrode end part P may be fused by heat or the like at the first bonding mark W1 and/or the preliminary bonding mark WP1 and then integrated with each other.

### (Positive electrode 30)

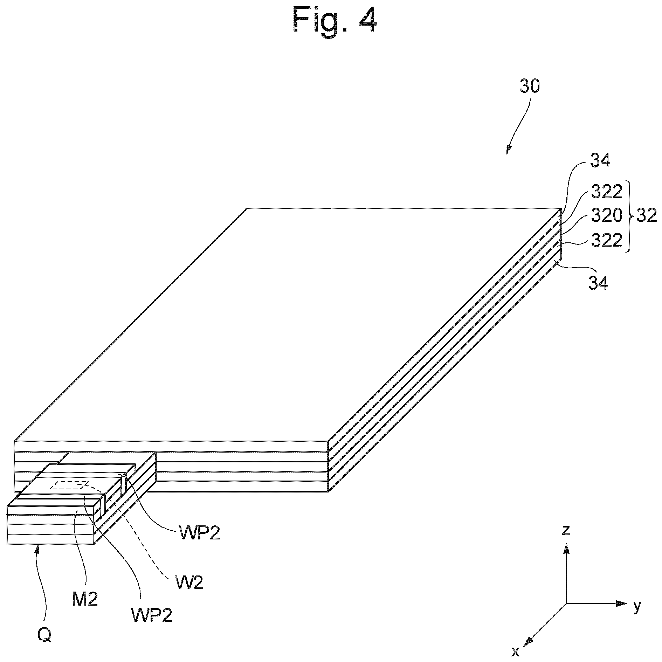

Figure 4 is a perspective view illustrating an example of a positive electrode 30. In one embodiment, the positive electrode 30 is configured to include a positive electrode current collector 32 and a positive electrode active material layer 34 disposed on the positive electrode current collector 32.

The positive electrode current collector 32 may be composed of a positive electrode insulating layer 320 and a pair of positive electrode conductive layers 322 that are disposed to sandwich the positive electrode insulating layer 320.

The positive electrode insulating layer 320 may be composed of, for example, a sheet-shaped (film-shaped) or fibrous resin. The resin may be, for example, at least one of a polyolefin resin such as polyethylene terephthalate (PET), polyethylene, or polypropylene, or a thermoplastic resin such as polystyrene, polyvinyl chloride, or polyamide. The positive electrode insulating layer 320 may be configured to laminate at least one or more of the resins a plurality of times. In one embodiment, the positive electrode insulating layer 320 is formed from a material having a melting point of 150°C or higher and 300°C or lower. In one embodiment, the thickness of the positive electrode insulating layer 320 may be 3 µm or more and 10 µm or less, or may be 4 µm or more and 8 µm or less.

The positive electrode insulating layer 320 can function to melt, for example, in a case where abnormal heat generation occurs in an overcharged state or a high temperature state, to damage the positive electrode 30, and to block a short-circuit current inside the battery. As a result, in a case of using the secondary battery 1, a rapid temperature rise inside the laminate ST can be suppressed, and the ignition of the battery can be suppressed. That is, the positive electrode insulating layer 320 can contribute to the improvement of the safety of the secondary battery 1.

The positive electrode conductive layer 322 is formed on both surfaces of the positive electrode insulating layer 320 so that the positive electrode insulating layer 320 is sandwiched. The positive electrode conductive layer 322 is in physical and/or electrical contact with the positive electrode active material layer 34 and functions to transfer electrons to and from the positive electrode active material layer 34. The positive electrode conductive layer 322 is composed of a conductor that does not react with lithium ions in the secondary battery 1. In one embodiment, the positive electrode conductive layer 322 is composed of at least one kind of material selected from the group consisting of aluminum, titanium, stainless steel, nickel, and an alloy thereof. In one example, the positive electrode conductive layer 322 is aluminum or an aluminum alloy. In one embodiment, the positive electrode conductive layer 322 is formed by subjecting the above-described material to vapor deposition, sputtering, electrolytic plating, or bonding on the surfaces of both sides of the positive electrode insulating layer 320. In one embodiment, the thickness of the positive electrode conductive layer 322 may be 0.5 µm or more and 5 µm or less, 0.7 µm or more and 3 µm or less, or 0.8 µm or more and 2.0 µm or less.

The positive electrode active material layer 34 may contain a positive-electrode active material for holding lithium ions, and the positive-electrode active material is filled with lithium ions and lithium ions are desorbed from the positive-electrode active material by charging/discharging of the battery. The positive-electrode active material may be a metal oxide or a metal phosphate. The metal oxide may be, for example, a cobalt oxide-based compound, a manganese oxide-based compound, or a nickel oxide-based compound. The metal phosphate may be, for example, an iron phosphate-based compound or a cobalt phosphate-based compound. In one embodiment, the positive-electrode active material may be at least one selected from the group consisting of LiCoO₂, LiNiₓCo_{y}Mn_{z}O (x + y + z = 1), LiNiₓCo_{y}Al_{z}O (x + y + z = 1), LiNiₓMn_{y}O (x + y = 1), LiNiO₂, LiMn₂O₄, LiFePO₄, LiCoPO₄, LiFeOF, LiNiOF, and LiTiS₂. The positive-electrode active material may be used alone or in a combination of two or more kinds thereof. In one embodiment, the positive electrode active material layer 34 may include one or more components other than the positive-electrode active material, such as a sacrificial positive electrode material, a gel electrolyte, a polymer electrolyte, a conductive auxiliary agent, and/or a binder.

As illustrated in Figure 4, the positive electrode current collector 32 has a positive electrode end part Q. In one embodiment, the positive electrode end part Q is constituted to extend from the side surface of the positive electrode current collector 32 in a second direction (in the example illustrated in Figure 4, although the second direction is the x direction that is the same as the first direction, the present invention is not limited thereto) different from the lamination direction as a part of the positive electrode current collector 32. The positive electrode active material layer 34 is not disposed on the positive electrode end part Q.

In one embodiment, a metal sheet M2 for a positive electrode may be provided on the positive electrode end part Q. The metal sheet M2 may be bonded to one surface of the positive electrode end part Q as illustrated in Figure 4, or may be bonded to each of both surfaces of the positive electrode end part Q. In addition, the metal sheet M2 may be provided only at the positive electrode end part Q of a part of the positive electrode 30, or may be provided at the positive electrode end parts Q of all the positive electrodes 30. In one embodiment, the metal sheet M2 is formed of the same material as the positive electrode conductive layer 322. The metal sheet M2 is, in one example, aluminum or an aluminum alloy. In one example, the metal sheet M2 may be a hard aluminum foil or may be a soft aluminum foil. The soft aluminum foil may be formed by subjecting a hard aluminum foil to a heat treatment at a high temperature (about 400°C). In one embodiment, the thickness of the metal sheet M2 may be 3 µm or more, 5 µm or more, or 7 µm or more. In one embodiment, the thickness of the metal sheet M2 may be 15 µm or less, 12 µm or less, or 10 µm or less.

As illustrated in Figure 4, the second bonding mark W2 formed by bonding to the positive electrode tab 42 is formed on the metal sheet M2 and the positive electrode end part Q. In addition, in one embodiment, a preliminary bonding mark WP2 formed by bonding the metal sheet M2 and the positive electrode end part Q may be formed on the metal sheet M2 and the positive electrode end part Q. The preliminary bonding mark WP2 is a bonding mark that is formed in a case where the metal sheet M2 and the positive electrode end part Q are preliminarily bonded before the bonding to the positive electrode tab 42. The second bonding mark W2 and the preliminary bonding mark WP2 can be formed at positions different from each other in a case of being viewed from the lamination direction (z direction). The preliminary bonding mark WP2 may be formed in one row or a plurality of rows in a line shape along the positive electrode end part Q, or may be formed in a shape of a plurality of dots. It is noted that in a case where the metal sheet M2, the positive electrode end part Q, and the positive electrode tab 42 are bonded at once without carrying out the preliminary bonding, only the second bonding mark W2 is formed, and the preliminary bonding mark WP2 is not formed.

In one embodiment, the second bonding mark W2 and/or the preliminary bonding mark WP2 may be a bonding mark by welding, that is, a welding mark. The welding may be, for example, ultrasonic welding, laser welding, resistance welding, or spot welding. The welding is, in one example, ultrasonic welding. In one embodiment, a part or the whole of the metal sheet M2 and the positive electrode conductive layer 322 of the positive electrode end part Q may be fused by heat or the like at the second bonding mark W2 and/or the preliminary bonding mark WP2 and then integrated with each other.

### (First bonding mark W1 and preliminary bonding mark WP1)

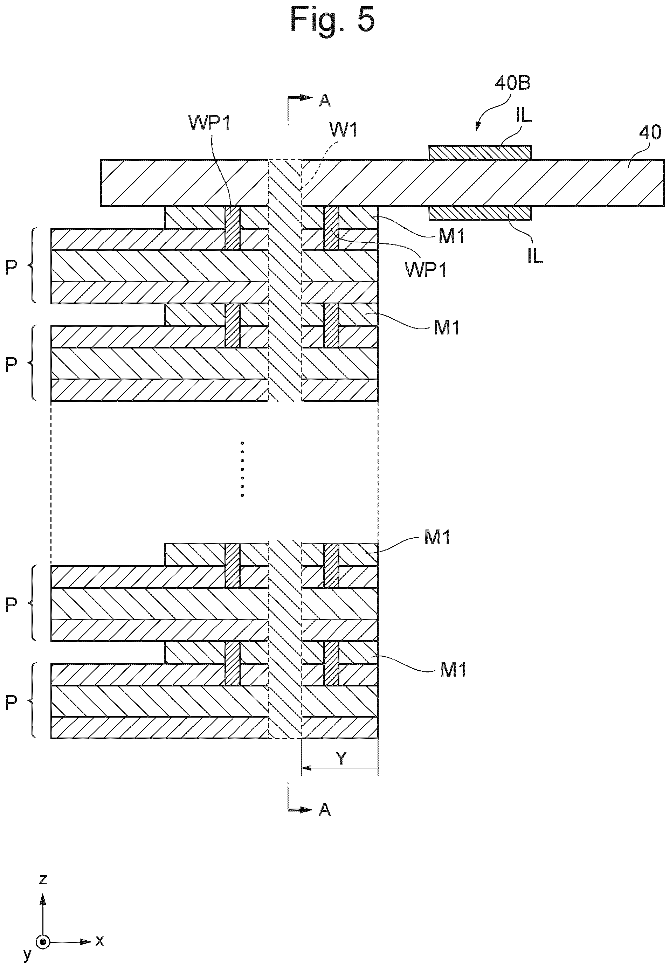

Figure 5 is a view for an explanatory description of a bonding state of a negative electrode tab 40, a negative electrode end part P, and a metal sheet M1. Figure 5 schematically illustrates a cross section obtained by cutting, along the xz plane, a site of the negative electrode end part P, in which the first bonding mark W1 and the preliminary bonding mark WP1 are included.

As illustrated in Figure 5, the first bonding mark W1 and the preliminary bonding mark WP1 are provided at positions different from each other in a case of being viewed from the lamination direction. The first bonding mark W1 is formed over the entirety of the negative electrode tab 40, each negative electrode end part P, and each metal sheet M1. That is, the first bonding mark W1 is formed to penetrate without being intermittently from the negative electrode tab 40 to the negative electrode end part P of the lowermost layer in the lamination direction. On the other hand, the preliminary bonding mark WP1 is formed for each of the negative electrode end parts P. In other words, one preliminary bonding mark WP1 is not formed across the plurality of negative electrode end parts P.

As illustrated in Figure 5, in the negative electrode end part P, the first bonding mark W1 is disposed at a predetermined distance Y or more inward from the outer edge of the negative electrode end part P in the first direction. In one embodiment, the distance Y may be 2.0 mm, may be 2.5 mm, or may be 3.0 mm. In one embodiment, in a case where the number of laminations of the negative electrode 10 in the laminate ST (that is, the total number of negative electrode end parts P) is denoted as X, the predetermined distance Y may be set such that a relationship of Y > 0.048X + 1.3 is satisfied. In one embodiment, X may be 10 or more, may be 15 or more, or may be 20 or more.

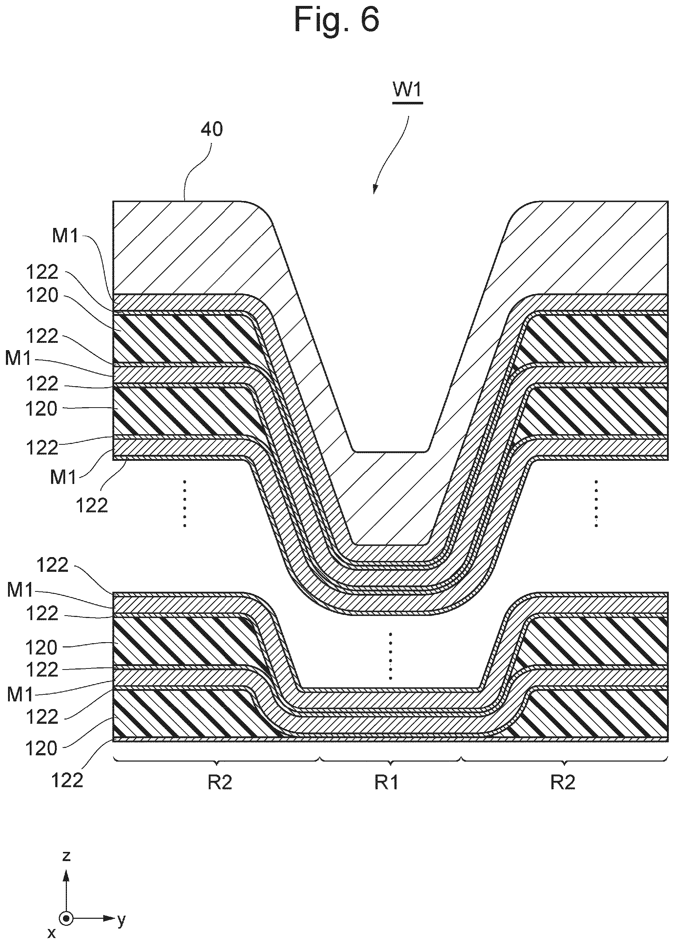

Figure 6 is a view illustrating a cross section of a first bonding mark W1. Figure 6 schematically illustrates a cross section (an A-A cross section in Figure 5) obtained by cutting the first bonding mark W1 along the zy plane. As illustrated in Figure 6, the cross section of the first bonding mark W1 includes the first region R1 and the second region R2. In one embodiment, the cross section of the first bonding mark W1 may have a recessed part that is recessed in one of the lamination directions.

In the first region R1, the negative electrode conductive layer 122 and the metal sheet M1 are integrally laminated, and are bonded to the negative electrode tab 40. Here, being integrally laminated includes a state in which a part or the whole of the respective negative electrode conductive layers 122 and the metal sheet M1 are fused by heat or the like (a state in which the respective layers cannot be distinguished from each other).

In one embodiment, the first region R1 may be substantially free of the negative electrode insulating layer 120 along the lamination direction. The first region R1 provides a physical path for electrically connecting the negative electrode tab 40 to each negative electrode conductive layer 122 and the metal sheet M1.

In one embodiment, the first region R1 may be constituted between the two second regions R2. In one embodiment, the maximum thickness of the first region R1 may be equal to or less than half of the maximum thickness of the second region R2.

In the second region R2, a pair of negative electrode conductive layers 122 sandwiching the negative electrode insulating layer 120 and the metal sheet M1 are laminated. That is, the second region R2 is a region including the negative electrode insulating layer 120 along the lamination direction.

In one embodiment, the first bonding mark W1 is formed by pressing the negative electrode tab 40, the negative electrode end part P, and the metal sheet M1 along the lamination direction. In this case, heat may be applied to the pressing site. For example, the first bonding mark W1 may be formed by welding (in this case, the first bonding mark W1 is a welding mark). As a result, the negative electrode insulating layer 120 is softened at the pressing site and is pushed outward from the pressing site in the width direction (the left-right direction in Figure 6). In addition, at the pressing site, each negative electrode conductive layer 122 and the metal sheet M1 are thermally melted and integrated. As a result, the first region R1 and the second region R2 can be formed.

Here, there is a case where a part of the metal material constituting the negative electrode conductive layer 122 and/or the metal sheet M1 is pushed out from the pressing site toward the first direction (the x direction in Figure 5 and Figure 6) during the formation of the first bonding mark W1. In this case, in a case where the metal material protrudes to the outside of the negative electrode end part P and then reaches the insulating material IL (see Figure 1 and Figure 5) of the insulating part 40B of the negative electrode tab 40, insulation failure may occur between the negative electrode 10 and the sealing part 102 (see Figure 1) of the sealed container 100. For example, in a case where cracking or the like occurs in the sealing part 102 (for example, an aluminum laminate film) in a state where the metal material that has protruded from the negative electrode end part P is present in the insulating part 40B, the negative electrode end part P of the negative electrode 10 and the sealed container 100 are short-circuited. In that case, the sealing part 102 may be damaged, which may cause a decrease in performance or a decrease in service life of the secondary battery 1.

In this regard, in the secondary battery 1, as described above, the first bonding mark W1 is disposed at a predetermined distance Y or more inward from the outer edge of the negative electrode end part P. Therefore, even in a case where a part of the metal material is pushed out from the pressing site toward the first direction during the formation of the first bonding mark W1, the metal material is suppressed from protruding from the outer edge of the negative electrode end part P and further reaching the insulating part 40B of the negative electrode tab 40. As a result, such insulation failure between the negative electrode 10 and the sealing part 102 (see Figure 1) of the sealed container 100 as described above can be suppressed.

In addition, as described above, in one embodiment, a metal sheet M1 for a negative electrode may be provided on the negative electrode end part P. In this case, the metal sheet M1 functions as an additional conductive layer of the negative electrode conductive layer 122 in the first bonding mark W1, and increases the proportion of the conductive layer to the negative electrode insulating layer 120. Therefore, the increase in resistance in the first bonding mark W1 is suppressed, and the output characteristics of the secondary battery 1 can be improved. In addition, in a case where the total number (the number of laminations) of the negative electrodes 10 is large, it is necessary to press and bond the negative electrode tab 40 and each negative electrode end part P with a stronger force; however, the metal sheet M1 functions as a protective layer of the negative electrode conductive layer 122, and thus the damage or breakage of the negative electrode conductive layer 122 can be suppressed. This makes it possible to improve the production yield of the secondary battery 1. In one embodiment, the resistance of the first bonding mark W1 may be 5.0 mΩ or less, may be 3.0 mΩ or less, may be 1.0 mΩ or less, or may be 0.5 mΩ or less.

### (Second bonding mark W2 and preliminary bonding mark WP2)

The second bonding mark W2 and the preliminary bonding mark WP2 of the positive electrode tab 42, the positive electrode end part Q, and the metal sheet M2 may be constituted in the same manner as the first bonding mark W1 and the preliminary bonding mark WP1 which are described with reference to Figure 5 and Figure 6. For example, in one embodiment, the second bonding mark W2 may be disposed at a predetermined distance Y or more inward from the outer edge of the positive electrode end part Q. As a result, the insulation failure between the positive electrode 30 and the sealing part 102 (see Figure 1) of the sealed container 100 can be suppressed.

### <Manufacturing method for secondary battery 1>

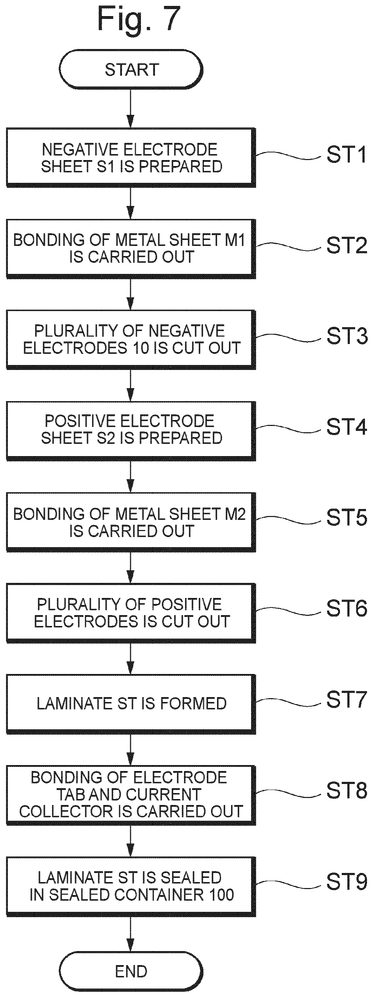

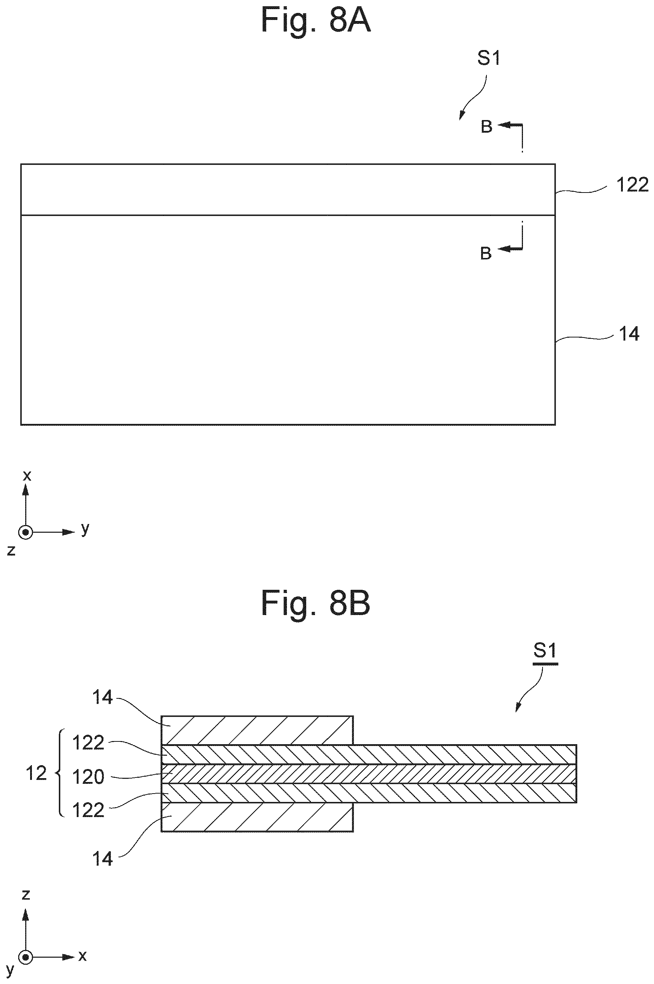

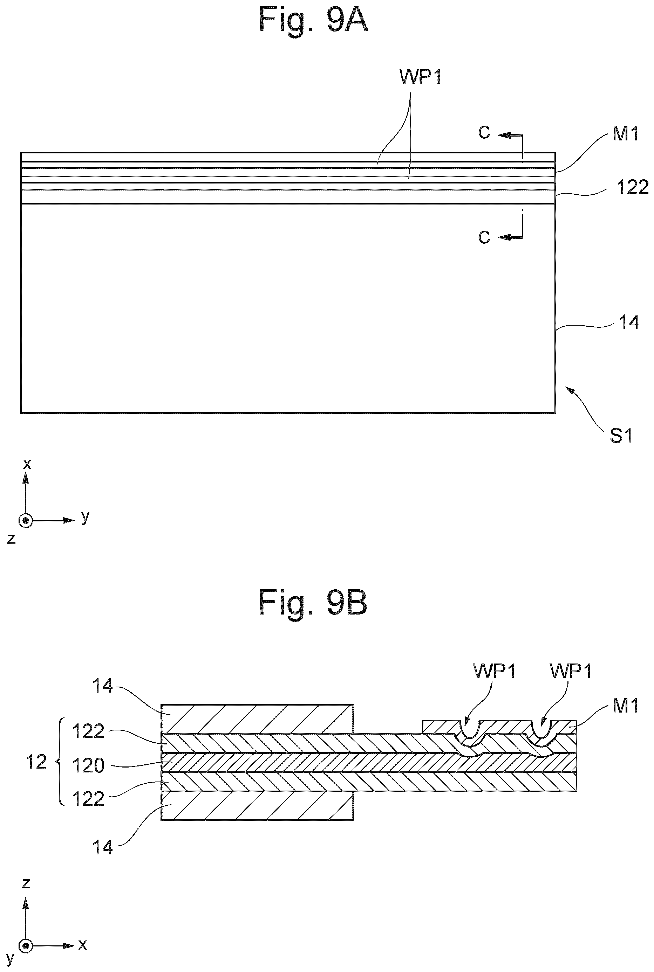

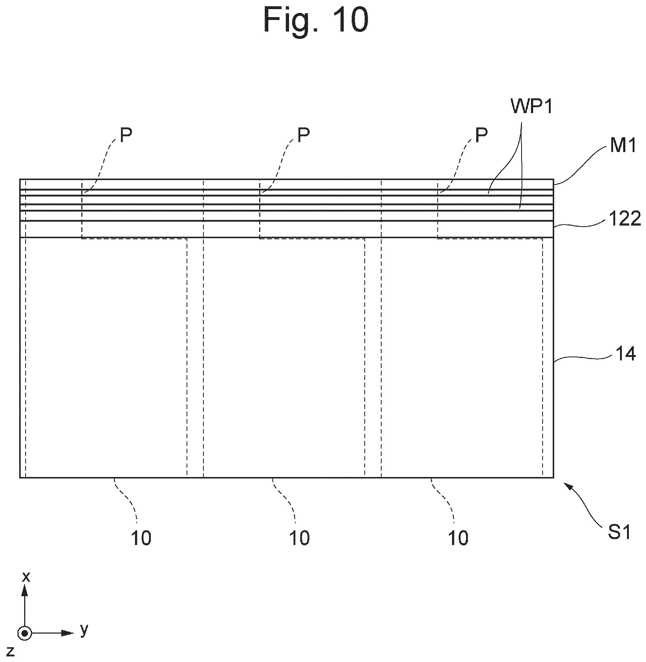

Next, an example of a manufacturing method for the secondary battery 1 (hereinafter, also referred to as "the present manufacturing method") will be described with reference to Figure 7 to Figure 10. Figure 7 is a flowchart illustrating an example of the present manufacturing method. Figure 8A and Figure 8B are each a view for an explanatory description of a step ST1 of Figure 7. Figure 9A to Figure 9D are each a view for an explanatory description of a step ST2 of Figure 7. Figure 10 is a view for an explanatory description of a step ST3 of Figure 7.

As illustrated in Figure 7, the present manufacturing method may include a step ST1 of preparing a negative electrode sheet S1, a step ST2 of bonding a metal sheet M1, a step ST3 of cutting out a plurality of negative electrodes 10, a step ST4 of preparing a positive electrode sheet S2, a step ST5 of bonding a metal sheet M2, a step ST6 of cutting out a plurality of positive electrodes 30, a step ST7 of forming a laminate ST, a step ST8 of bonding an electrode tab and a current collector, and a step ST9 of enclosing the laminate ST in a sealed container 100.

First, in the step ST1, as illustrated in Figure 8A and Figure 8B, a negative electrode sheet S1 is prepared. Figure 8A is a plan view of the negative electrode sheet S1. Figure 8B is a B-B cross-sectional view of Figure 8A. As illustrated in Figure 8A, the negative electrode sheet S1 may be a strip-shaped sheet having a longitudinal direction (y direction) and a lateral direction (x direction). In one embodiment, as illustrated in Figure 8A and Figure 8B, the negative electrode sheet S1 may be composed of a negative electrode current collector 12 and a negative electrode active material layer 14 applied onto both surfaces of the negative electrode current collector 12. At one end of the negative electrode sheet S1 in the lateral direction (x direction), the negative electrode active material layer 14 is not formed, and the negative electrode conductive layer 122 of the negative electrode current collector 12 is exposed.

It is noted that in one embodiment, the separator 20 may be provided from the beginning on one surface (the surface on the side where the negative electrode conductive layer 122 is not formed) of the negative electrode active material layer 14. In this case, in the step ST7, it is not necessary to dispose the separator 20 by aligning the separator 20 between the negative electrode 10 and the positive electrode 30.

Next, in the step ST2, as illustrated in Figure 9A to Figure 9D, the metal sheet M1 is bonded to one end of the negative electrode sheet S1 in the lateral direction. Figure 9A is a plan view of a negative electrode sheet S1 to which the metal sheet M1 has been bonded. Figure 9B to Figure 9D are examples of a C-C cross section of Figure 9A.

As illustrated in Figure 9A, the preliminary bonding mark WP1 is formed in a line shape, for example, along the longitudinal direction by the bonding in the step ST2. The metal sheet M1 may be bonded to the negative electrode sheet S1 by welding. The welding may be, for example, ultrasonic welding, laser welding, resistance welding, or spot welding. The welding is, in one example, ultrasonic welding.

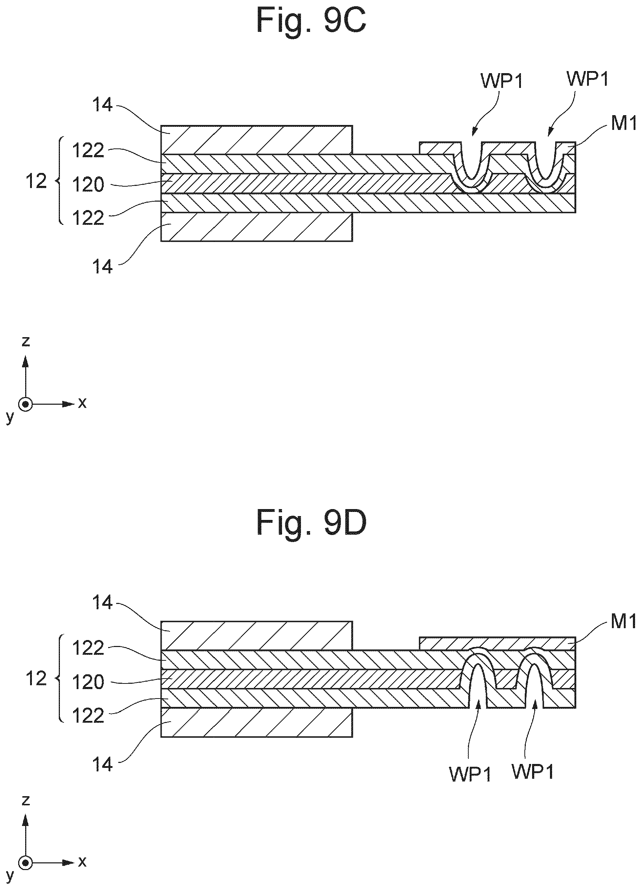

In one embodiment, the bonding in the step ST2 may be carried out by pressing the metal sheet M1 against the negative electrode current collector 12. For example, as illustrated in Figure 9B and Figure 9C, the preliminary bonding mark WP1 may be formed such that the metal sheet M1 is recessed toward the side of the negative electrode current collector 12. In one embodiment, as illustrated in Figure 9B, the preliminary bonding mark WP1 may be provided between the metal sheet M1 and one negative electrode conductive layer 122 (which comes into contact with the metal sheet M1). In this case, in the preliminary bonding mark WP1, the metal sheet M1 is not electrically connected to the other negative electrode conductive layer 122. In one embodiment, the preliminary bonding mark WP1 may be provided between the metal sheet M1 and both negative electrode conductive layers 122 as illustrated in Figure 9C. In this case, in the preliminary bonding mark WP1, the metal sheet M1 is electrically connected to both negative electrode conductive layers 122.

In one embodiment, the bonding in the step ST2 may be carried out by pressing the negative electrode current collector 12 against the metal sheet M1. For example, as illustrated in Figure 9D, the preliminary bonding mark WP1 may be formed such that the negative electrode current collector 12 is recessed toward the side of the metal sheet M1. In this case, in the preliminary bonding mark WP1, the metal sheet M1 is electrically connected to both negative electrode conductive layers 122.

Next, in the step ST3, a plurality of negative electrodes 10 is cut out from the negative electrode sheet S1. Specifically, as illustrated in Figure 10, a plurality of negative electrodes 10 having a given shape is cut out from the negative electrode sheet S1 by using a cutting blade, a laser, or the like. As a result, a plurality of negative electrodes 10 in which the metal sheet M1 has been preliminarily bonded is obtained.

The step ST4 to the step ST6 may be carried out in the same manner as the step ST1 to the step ST3. That is, the positive electrode sheet S2 including the positive electrode current collector 32 and the positive electrode active material layer 34 is prepared (Step ST4), the metal sheet M2 is bonded to one end of the positive electrode sheet S2 in the lateral direction (Step ST5), and a plurality of positive electrodes 30 may be cut out from the metal sheet M2 (Step ST6).

Next, in the step ST7, the laminate ST is formed. Specifically, the negative electrode 10 and the positive electrode 30 which are prepared in the step ST1 and the step ST3 are alternately disposed to be spaced apart from each other in the lamination direction with the separator 20 being interposed therebetween as illustrated in Figure 2.

Next, in the step ST8, the electrode tab and the current collector are bonded to each other. Specifically, the negative electrode end part P of the negative electrode current collector 12 and the metal sheet M1 are bonded to the negative electrode tab 40 to form the above-described first bonding mark W1. In this case, the bonding site to the negative electrode tab 40 is positioned at a predetermined distance Y or more inward from the outer edge of the negative electrode end part P. It is noted that the bonding site may be a position where the bonding site does not overlap with the preliminary bonding mark WP1 in the lamination direction. In addition, the positive electrode end part Q of the positive electrode current collector 32 and the metal sheet M2 are bonded to the positive electrode tab 42 to form the above-described second bonding mark W2. In this case, the bonding site to the positive electrode tab 42 is positioned at a predetermined distance Y or more inward from the outer edge of the positive electrode end part Q. It is noted that the bonding site may be a position where the second bonding mark W2 does not overlap with the preliminary bonding mark WP2 in the lamination direction. The bonding of the electrode tab and the current collector may be carried out by ultrasonic welding, laser welding, resistance welding, or spot welding.

Next, in the step ST9, the laminate ST formed in the step ST8 is enclosed in the sealed container 100. In this case, as illustrated in Figure 1, the insulating part 40B of the negative electrode tab 40 is disposed on the sealing part 102 of the sealed container 100, and the other end part 40C of the negative electrode tab 40 is taken out to the outside of the sealed container 100. In addition, the insulating part 42B of the positive electrode tab 42 is disposed on the sealing part 102 of the sealed container 100, and the other end part 42C of the positive electrode tab 42 is taken out to the outside of the sealed container 100. In one embodiment, the electrolyte solution may be enclosed in the sealed container 100 together with the laminate ST. In the manner as described above, the secondary battery 1 is manufactured.

In the present manufacturing method, in the step ST8, the bonding site to the negative electrode tab 40 is set to a position at a predetermined distance Y or more inward from the outer edge of the negative electrode end part P. As a result, it is suppressed that a part of the metal material constituting the negative electrode conductive layer 122 and/or the metal sheet M1 protrudes from the outer edge of the negative electrode end part P and then reaches the insulating part 40B of the negative electrode tab 40. As a result, the insulation failure between the negative electrode 10 and the sealing part 102 of the sealed container 100 can be suppressed. In the present manufacturing method, in the step ST8, the bonding site to the positive electrode tab 42 is set to a position at a predetermined distance Y or more inward from the outer edge of the positive electrode end part Q, and thus the above points also apply to the positive electrode 30.

In addition, in the present manufacturing method, in the step ST2, the metal sheet M1 is bonded in advance to the negative electrode sheet S1. Therefore, in the step ST3, the metal sheet M1 can be cut out at the same time in accordance with the shape of the negative electrode end part P. That is, another step of cutting out the metal sheet M1 in accordance with the shape of the negative electrode end part P is not required. In addition, in the step ST9, it is not necessary to align the position of the metal sheet M1 and the position of the negative electrode end part P, and thus the negative electrode tab 40 and the negative electrode end part P are easily bonded to each other. Further, in the step ST9, it is possible in principle to provide the first bonding mark W1 such that the first bonding mark W1 does not overlap with the preliminary bonding mark WP1 in the lamination direction. By providing the first bonding mark W1 such that the first bonding mark W1 does not overlap with the preliminary bonding mark WP2 in the lamination direction, the bonding state of the first bonding mark W1 is improved, and the increase in resistance of the first bonding mark W1 can be suppressed, as compared with a case where both the first bonding mark W1 and the preliminary bonding mark WP2 are provided to overlap with each other. In the present manufacturing method, in the step ST4, the metal sheet M2 is bonded in advance to the positive electrode sheet S2, and thus the above points also apply to the positive electrode 30.

### <Method of using secondary battery 1>

The secondary battery 1 is charged/discharged by connecting the negative electrode tab 40 to one end of the external circuit and connecting the positive electrode tab 42 to the other end of the external circuit. The external circuit may be, for example, a resistor, a power source, an apparatus, a device, another battery, a potentiostat, or the like. Each of the negative electrode end parts P of the plurality of negative electrodes 10 may be connected to the external circuit at the same potential. In addition, each of the positive electrode end parts Q of the plurality of positive electrodes 30 may be connected to the external circuit at the same potential.

In a case where a voltage is applied between the negative electrode tab 40 and the positive electrode tab 42 such that a current flows from the negative electrode tab 40 to the positive electrode tab 42 through an external circuit, the secondary battery 1 is charged, and lithium metal is deposited on the negative electrode 10. In a case where the negative electrode tab 40 and the positive electrode tab 42 in the secondary battery 1 after charging are connected through a desired external circuit, the secondary battery 1 is discharged, and the lithium metal of the negative electrode 10 is electrolytically dissolved.

In one embodiment, in the secondary battery 1, a solid electrolyte interfacial layer (SEI layer) may be formed on the surface of the negative electrode 10 or the surface of the separator 20 (that is, at the interface between the negative electrode 10 and the separator 20) by the first charging (initial charging) after the assembly of the battery. The SEI layer may contain, for example, an inorganic compound containing lithium, an organic compound containing lithium, or the like. In one embodiment, the thickness of the SEI layer is 1.0 nm or more and 10 µm or less. In a case where the SEI layer is formed in the secondary battery 1, lithium metal is deposited or dissolved at the negative electrode 10 and/or an interface between the separator 20 and the SEI layer due to charging/discharging.

According to the secondary battery 1 described above, the output characteristics and the productivity of the battery are capable of being improved.

### <Modification example>

The secondary battery 1 can be variously modified without departing from the scope and gist of the present disclosure.

### (Negative electrode 10)

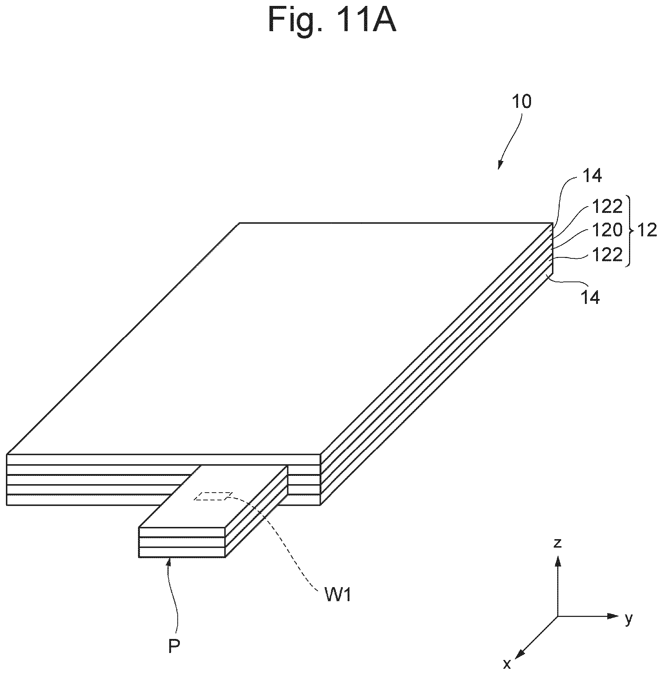

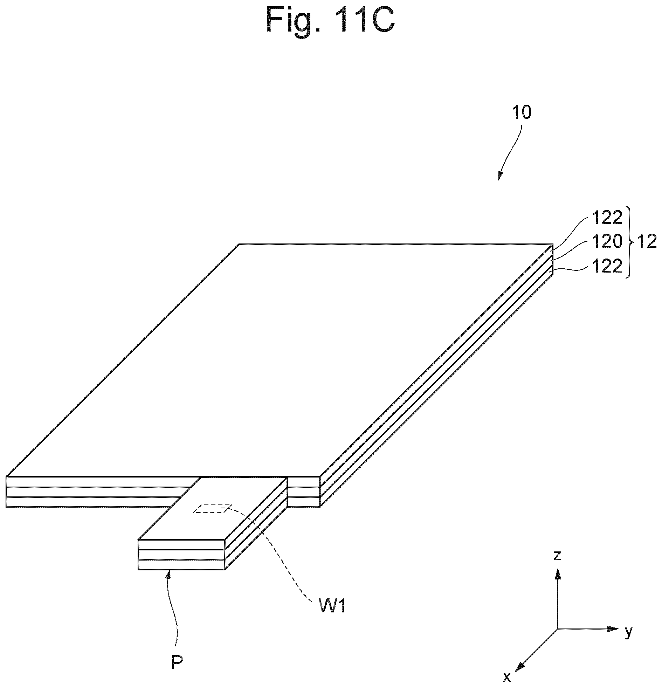

Each of Figures 11A to 11C is a perspective view illustrating another example of the negative electrode 10. For example, as illustrated in Figure 11A and Figure 11C, a metal sheet may not be provided at the negative electrode end part P of the negative electrode 10.

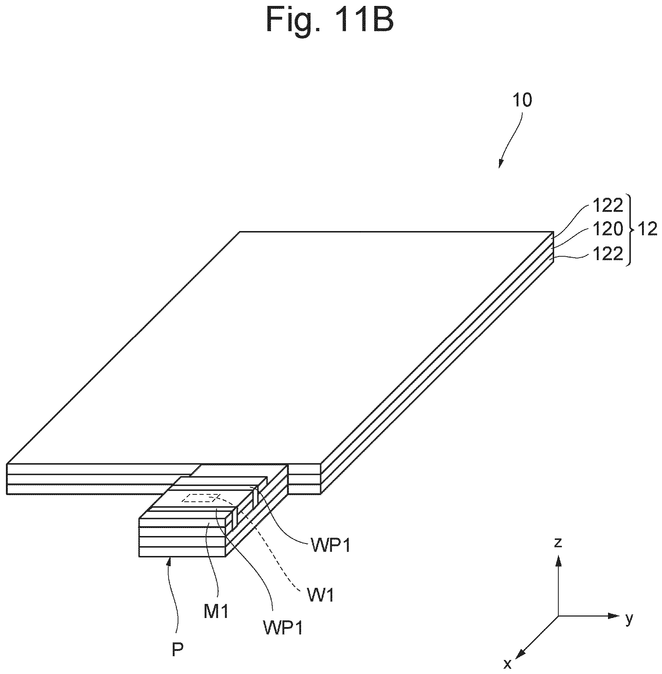

For example, as illustrated in Figure 11B or Figure 11C, the negative electrode 10 may be composed of the negative electrode current collector 12 and may be substantially free of a negative-electrode active material. Here, the fact that the negative electrode 10 " is substantially free of the negative-electrode active material" includes, for example, that the layer thickness of the negative-electrode active material that is deposited on the negative electrode 10 at the end of discharging (for example, a state where the open circuit voltage of the battery is 2.5 V or more and 3.6 V or less) is 25 µm or less. It is noted that the layer thickness of the negative-electrode active material at the end of discharging may be 20 µm or less, 15 µm or less, 10 µm or less, or 5 µm or less, and may be 0 µm. Since the negative electrode 10 is substantially free of a negative-electrode active material, the energy density per volume can be improved in addition to the weight energy density. It is noted that in this case, the secondary battery 1 can also be referred to as an "anode-free lithium battery", a "zero-anode lithium battery", or an "anode-less lithium battery".

In the example illustrated in Figure 11B and Figure 11C, the negative electrode 10 does not have a negative-electrode active material before the initial charging of the battery (in a state from the assembly of the battery until the first charging is carried out). That is, in the secondary battery 1, charging/discharging may be carried out by, after the initial charging, depositing lithium metal on the negative electrode and electrolytically dissolving the deposited lithium metal. In this case, the volume and the mass occupied by the negative-electrode active material are suppressed, the volume and the mass of the entire battery are reduced, and, in principle, the energy density is increased. It is noted that the fact that "lithium metal is deposited on the negative electrode" includes not only that lithium metal is deposited on the surface of the negative electrode but also that lithium metal is deposited on the surface of the solid electrolyte interface (SEI) layer or the surface or inside of the buffer functional layer, which will be described later.

In the example illustrated in Figure 11B and Figure 11C, in the negative electrode 10, in a case where the mass of lithium metal deposited on the negative electrode in a state where the voltage is 4.2 V is denoted as M_{4.2} and the same mass at a voltage of 3.0 V is denoted as M_{3.0}, M_{3.0}/M_{4.2} may be 40% or less or 35% or less. In one embodiment, the ratio M_{3.0}/M_{4.2} may be 1.0% or more, 2.0% or more, 3.0% or more, or 4.0% or more.

In the example illustrated in Figure 11B and Figure 11C, the thickness of the negative electrode 10 may be 1.0 µm or more and 30 µm or less. As a result, the volume occupied by the negative electrode 10 in the secondary battery 1 can be reduced, and the energy density can be improved. The thickness of the negative electrode 10 may be 2.0 µm or more and 20 µm or less, 2.0 µm or more and 18 µm or less, or 3.0 µm or more and 15 µm or less.

### (Buffer functional layer)

In one embodiment, a porous or fibrous buffer functional layer may be provided between the negative electrode 10 and the separator 20. The buffer functional layer has a solid portion (including a gel-like portion) having ion conductivity and electronic conductivity, and a pore portion composed of a gap of the solid portion. In this case, the lithium metal can be deposited on the surface (at the interface between the negative electrode 10 and the buffer functional layer) of the negative electrode 10 and/or inside the buffer functional layer (the surface of the solid portion of the buffer functional layer).

### (Positive electrode 30)

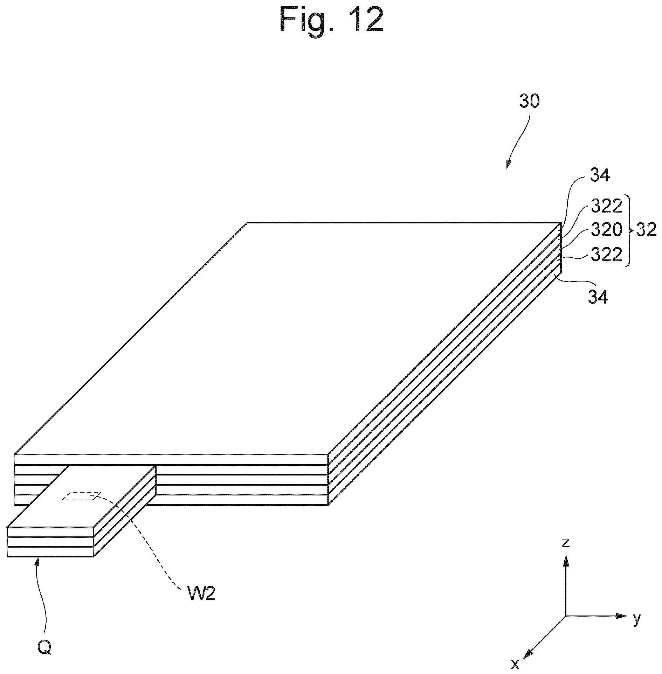

Figure 12 is a perspective view illustrating another example of the positive electrode 30. For example, as illustrated in Figure 12, a metal sheet may not be provided at the positive electrode end part Q of the positive electrode 30.

### (Laminate ST)

Figure 13 and Figure 14 are each a perspective view for an explanatory description of another lamination example of a plurality of negative electrodes 10. As illustrated in Figure 13 and Figure 14, the plurality of negative electrodes 10 may be constituted as one flat plate-shaped sheet as a whole, instead of each of the plurality of negative electrodes 10 being one flat plate-shaped sheet. For example, as illustrated in Figure 13, a plurality of negative electrodes 10 may be constituted by winding the negative electrode sheet S1 a plurality of times. In addition, for example, as illustrated in Figure 14, the plurality of negative electrodes 10 may be constituted by alternately folding the negative electrode sheet S1 a plurality of times at an acute angle. It is noted that the negative electrode sheet S1 may be constituted as illustrated in Figure 8A or may be constituted by bonding the metal sheet M1 as illustrated in Figure 9A.

Similarly, the plurality of positive electrodes 30 may be constituted as one flat plate-shaped sheet as a whole, instead of each of the plurality of positive electrodes 30 being one flat plate-shaped sheet. For example, the plurality of positive electrodes 30 may be constituted by winding the positive electrode sheet S2 a plurality of times as in Figure 13. In addition, for example, the plurality of positive electrodes 30 may be constituted by alternately folding the positive electrode sheet S2 a plurality of times at an acute angle as in Figure 14.

Hereinafter, experiments that have been carried out to verify the effects of the present disclosure will be described. The present disclosure is not limited by the following experiments.

### <Experiment 1>

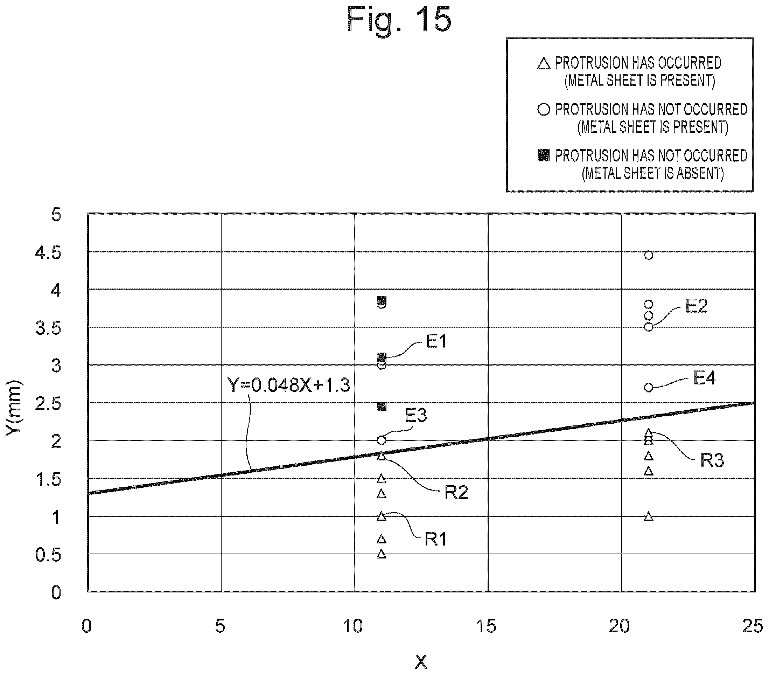

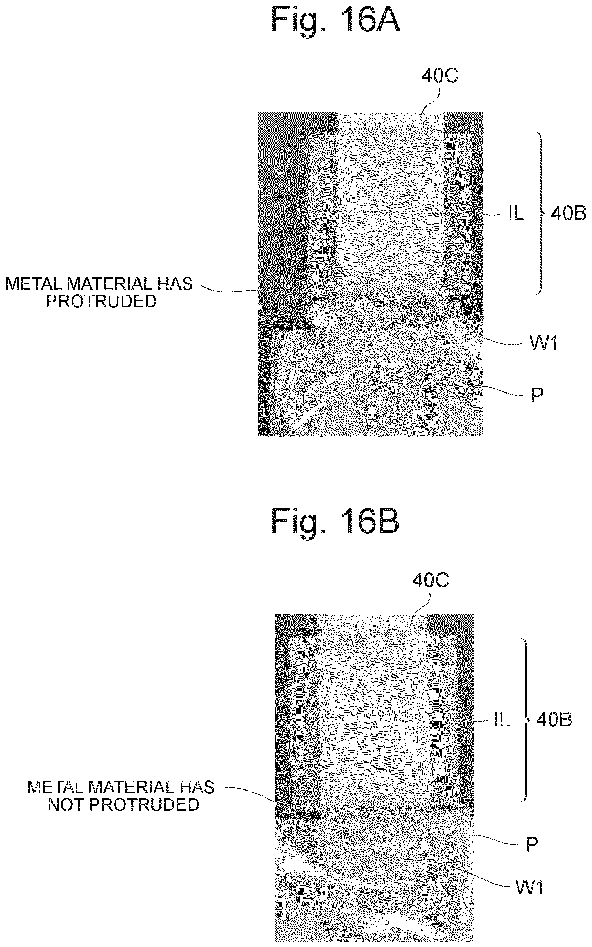

Figure 15 is a view illustrating the results of Experiment 1. Figure 16A is an example of a case where the metal material has protruded in Experiment 1. Figure 16B is an example of a case where the metal material has not protruded in Experiment 1. Figure 16A and Figure 16B are examples in a case where the electrode tab 40 is viewed from the side of the negative electrode end part P (in Figure 2, a case where the electrode tab 40 is viewed from the negative electrode end part P at the lowermost end part in the z direction).

In Experiment 1, a plurality of laminates ST having the structure illustrated in Figure 2 were prepared. The number of laminations X (11 sheets or 21 sheets) of the negative electrode 10, the distance Y (see Figure 5, 0.5 mm to 4.45 mm) from the outer edge of the negative electrode end part P to the first bonding mark W1, and the presence or absence of the metal sheet M1 are different among the respective laminates ST. The common configuration for each laminate ST is as follows.

In each laminate ST, polyethylene terephthalate (PET) having a thickness of 6 µm was used as the negative electrode insulating layer 120. As the negative electrode conductive layer 122, a copper foil having a thickness of 1.0 µm was used. As the negative electrode active material layer 14, a mixed material obtained by mixing 97 parts by mass of graphite, 0.5 parts by mass of carbon black as a conductive auxiliary agent, 1.5 parts by mass of carboxymethyl cellulose (CMC) as a binder, and 1.0 parts by mass of styrene-butadiene rubber (SBR) in water as a solvent was used. For a laminate in which the metal sheet M1 was disposed, a copper foil having a thickness of 4 µm was used as the metal sheet M1. As the negative electrode tab 40, copper having a thickness of 0.2 mm, which had been subjected to nickel plating, was used.

In each laminate ST, as the separator 20, a sheet having a surface coated with a mixture of polyvinylidene fluoride (PVDF) and Al₂O₃ was used.

In each laminate ST, a film-shaped polyethylene terephthalate having a thickness of 6 µm was used as the positive electrode insulating layer 320. As the positive electrode conductive layer 322, aluminum having a thickness of 1.0 µm was used. As the positive electrode active material layer 34, a mixture obtained by mixing 96 parts by mass of LiNi_{0.8}Co_{0.15}Al_{0.05}O₂ as a positive-electrode active material, 2 parts by mass of carbon black as a conductive auxiliary agent, and 2 parts by mass of polyvinylidene fluoride (PVDF) as a binder in N-methyl-pyrrolidone (NMP) as a solvent was used. In addition, aluminum was used as the metal sheet M2. As the positive electrode tab 42, aluminum having a thickness of 0.2 mm was used.

The presence or absence of "protrusion" of the metal material from the negative electrode end part P was evaluated for each of the laminates ST prepared as described above. As illustrated in Figure 16A, a case where the metal material from the negative electrode end part P came in contact with the insulating part 40B of the negative electrode tab 40 was denoted as "protrusion has occurred". In addition, as illustrated in Figure 16B, a case where the metal material from the negative electrode end part P did not come in contact with the insulating part 40B of the negative electrode tab 40 was denoted as "protrusion has not occurred".

As illustrated in Figure 15, in a case where the number of laminations X was 11, the "protrusion" of the metal material does not occur in the laminate ST in which Y was 2.0 mm or more. In addition, in a case where the number of laminations X was 21, the "protrusion" of the metal material did not occur in the laminate ST in which the distance Y was 2.7 mm or more. From the results of Figure 15, it is considered that the distance Y and the number of laminations X need to be in a relationship of Y > 0.048X + 1.3 in order to prevent the protrusion. It is considered that the reason why the distance Y at which the protrusion does not occur increases as the number X of laminations increases is that the number of bonding interfaces increases as the number X of laminations increases, and thus the pressing force required for bonding increases, and as a result, the metal material is easily pushed out.

### <Experiment 2>

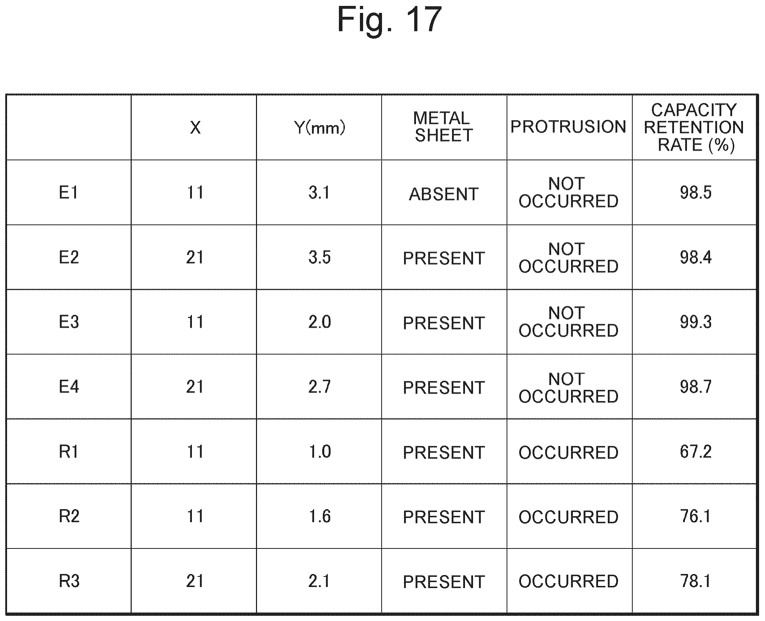

Figure 17 is a view illustrating the results of Experiment 2. In Experiment 2, each secondary battery having the structure illustrated in Figure 1 was prepared using the plurality of laminates ST (shown as E1 to E4 and R1 to R3 in Figure 15) prepared in Experiment 1, and a cycle test was carried out. In the cycle test, 0.3 C charging - 0.3 C discharging was repeated for 100 cycles while applying a pressure of 50 kPa to the secondary battery 1 in a constant temperature tank at 25°C. Then, a capacity retention rate (%) at 100 cycles was measured. The capacity retention rate (%) is a ratio (A2/A1 x 100) of the capacity (A2) of the secondary battery 1 at the end of 100 cycles to the capacity (A1) at the end of one cycle.

As illustrated in Figure 17, the capacity retention rates of the secondary batteries formed from the laminates E1 to E4 in which the protrusion of the metal material did not occur were all 98% or more, which was extremely good as compared with the secondary batteries formed from the laminates R1 to R3 in which the protrusion of the metal material occurred. This is considered to be because insulation failure did not occur between the negative electrode 10 and the sealing part 102 of the sealed container 100.

The embodiments of the present disclosure further include the following aspects.

### (Addendum 1)

A lithium secondary battery comprising:
a laminate in which a plurality of positive electrodes and a plurality of negative electrodes are laminated in a lamination direction, a separator being interposed between the positive electrode and the negative electrode, one of the positive electrode and the negative electrode including a first current collector, the first current collector comprising a pair of conductive layers and a resin layer, the pair of conductive layers sandwiching the resin layer, the first current collector including a first end part, the first end part extending in a first direction different from the lamination direction;
a first electrode tab electrically connected to the first end part, the first electrode tab including a first bonding mark and a first insulating part, the first bonding mark being formed by bonding to the first end part, the first insulating part being disposed apart from the first bonding mark in the first direction, the first insulating part being covered with an insulating material; and
a sealed container including a sealing part, the sealed container being configured, while enclosing the laminate inside the sealing part, to sandwich the first insulating part of the first electrode tab at the sealing part and to allow a part of the first electrode tab to be taken out to an outside of the sealed container

### (Addendum 2)

The lithium secondary battery according to Addendum 1, in which the first bonding mark in the first end part is provided 2 mm or more inward from an outer edge of the first end part in the first direction.

### (Addendum 3)

The lithium secondary battery according to Addendum 1, in which the first bonding mark in the first end part is provided 2.5 mm or more inward from an outer edge of the first end part in the first direction.

### (Addendum 4)

The lithium secondary battery according to Addendum 1, in which in a case where a total number of the first current collectors included in the laminate is denoted as X and a distance between the first bonding mark in the first end part and an outer edge of the first end part in the first direction is denoted as Y, a relationship of Y > 0.048X + 1.3 is satisfied.

### (Addendum 5)

The lithium secondary battery according to Addendum 4, in which the X is 10 or more.

### (Addendum 6)

The lithium secondary battery according to any one of Addendum 1 to Addendum 5, in which the first bonding mark is a welding mark.

### (Addendum 7)

The lithium secondary battery according to any one of Addendum 1 to Addendum 6, in which the first bonding mark includes a region in which the pair of conductive layers are integrated with each other in a cross section in the lamination direction.

### (Addendum 8)

The lithium secondary battery according to any one of Addendum 1 to Addendum 5, in which the first end part and the first electrode tab are bonded to each other with a metal sheet being interposed between the first end part and the first electrode tab.

### (Addendum 9)

The lithium secondary battery according to Addendum 8, in which the first bonding mark is a welding mark.

### (Addendum 10)

The lithium secondary battery according to Addendum 8 or Addendum 9, in which the first bonding mark includes a region in which the pair of conductive layers and the metal sheet are integrated in a cross section in the lamination direction.

### (Addendum 11)

The lithium secondary battery according to any one of Addendum 8 to Addendum 10, in which the first end part has a preliminary bonding mark formed by bonding to the metal sheet, and the preliminary bonding mark is provided at a position different from the first bonding mark in a case of being viewed from the lamination direction.

### (Addendum 12)

The lithium secondary battery according to any one of Addendum 1 to Addendum 11, in which the first current collector is a negative electrode current collector of the negative electrode, and the first electrode tab is a negative electrode tab that is connected to the negative electrode current collector.

### (Addendum 13)

The lithium secondary battery according to any one of Addendum 1 to Addendum 12, in which the sealed container is formed of an aluminum laminate film.

### (Addendum 14)

The lithium secondary battery according to any one of Addendum 1 to Addendum 13, wherein the other of the positive electrode and the negative electrode includes a second current collector, the second current collector comprising a pair of conductive layers and a resin layer, the pair of conductive layers sandwiching the resin layer, the second current collector including a second end part, the second end part extending in a second direction different from the lamination direction.

### (Addendum 15)

The lithium secondary battery according to Addendum 14, further comprising a second electrode tab electrically connected to the second end part,
wherein the second electrode tab includes a second bonding mark and a second insulating part, the second bonding mark being formed by bonding to the second end part, the second insulating part being disposed apart from the second bonding mark in the second direction, the second insulating part being covered with an insulating material, and
wherein the sealed container is configured to sandwich the second insulating part of the second electrode tab at the sealing part and to allow a part of the second electrode tab to be taken out to the outside of the sealed container.

### (Addendum 16)

The lithium secondary battery according to Addendum 14 or Addendum 15, in which the first direction and the second direction are the same direction.

### (Addendum 17)

The lithium secondary battery according to Addendum 14 or Addendum 15, in which the first direction and the second direction are directions different from each other.

### Reference Signs List

1: lithium secondary battery
10: negative electrode
20: separator
30: positive electrode
40: negative electrode tab
40B: insulating part
42: positive electrode tab
42B: insulating part
100: sealed container
102: sealing part
IL: insulating material
M1, M2: metal sheet
P: negative electrode end part
Q: positive electrode end part
ST: laminate
W1: first bonding mark
W2: second bonding mark
WP1, WP2: preliminary bonding mark

## Claims

1. A lithium secondary battery comprising:
a laminate in which a plurality of positive electrodes and a plurality of negative electrodes are laminated in a lamination direction, a separator being interposed between the positive electrode and the negative electrode, one of the positive electrode and the negative electrode including a first current collector, the first current collector comprising a pair of conductive layers and a resin layer, the pair of conductive layers sandwiching the resin layer, the first current collector including a first end part, the first end part extending in a first direction different from the lamination direction;
a first electrode tab electrically connected to the first end part, the first electrode tab including a first bonding mark and a first insulating part, the first bonding mark being formed by bonding to the first end part, the first insulating part being disposed apart from the first bonding mark in the first direction, the first insulating part being covered with an insulating material; and
a sealed container including a sealing part, the sealed container being configured, while enclosing the laminate inside the sealing part, to sandwich the first insulating part of the first electrode tab at the sealing part and to allow a part of the first electrode tab to be taken out to an outside of the sealed container.

2. The lithium secondary battery according to Claim 1, wherein the first bonding mark in the first end part is provided 2 mm or more inward from an outer edge of the first end part in the first direction.

3. The lithium secondary battery according to Claim 1, wherein the first bonding mark in the first end part is provided 2.5 mm or more inward from an outer edge of the first end part in the first direction.

4. The lithium secondary battery according to Claim 1, wherein in a case where a total number of the first current collectors included in the laminate is denoted as X and a distance between the first bonding mark in the first end part and an outer edge of the first end part in the first direction is denoted as Y, a relationship of Y > 0.048X + 1.3 is satisfied.

5. The lithium secondary battery according to Claim 4, wherein the X is 10 or more.

6. The lithium secondary battery according to any one of Claims 1 to 5, wherein the first bonding mark is a welding mark.

7. The lithium secondary battery according to Claim 6, wherein the first bonding mark includes a region in which the pair of conductive layers are integrated with each other in a cross section in the lamination direction.

8. The lithium secondary battery according to any one of Claims 1 to 5, wherein the first end part and the first electrode tab are bonded to each other with a metal sheet being interposed between the first end part and the first electrode tab.

9. The lithium secondary battery according to Claim 8, wherein the first bonding mark is a welding mark.

10. The lithium secondary battery according to Claim 9, wherein the first bonding mark includes a region in which the pair of conductive layers and the metal sheet are integrated over a plurality of layers in a cross section in the lamination direction.

11. The lithium secondary battery according to Claim 8,
wherein the first end part has a preliminary bonding mark formed by bonding to the metal sheet, and the preliminary bonding mark is provided at a position different from the first bonding mark in a case of being viewed from the lamination direction.

12. The lithium secondary battery according to any one of Claims 1 to 5,
wherein the first current collector is a negative electrode current collector of the negative electrode, and
the first electrode tab is a negative electrode tab that is connected to the negative electrode current collector.

13. The lithium secondary battery according to Claim 12, wherein the sealed container is formed of an aluminum laminate film.

14. The lithium secondary battery according to any one of Claims 1 to 5,
wherein the other of the positive electrode and the negative electrode includes a second current collector, the second current collector comprising a pair of conductive layers and a resin layer, the pair of conductive layers sandwiching the resin layer, the second current collector including a second end part, the second end part extending in a second direction different from the lamination direction.

15. The lithium secondary battery according to Claim 14, further comprising a second electrode tab electrically connected to the second end part,
wherein the second electrode tab includes a second bonding mark and a second insulating part, the second bonding mark being formed by bonding to the second end part, the second insulating part being disposed apart from the second bonding mark in the second direction, the second insulating part being covered with an insulating material, and
wherein the sealed container is configured to sandwich the second insulating part of the second electrode tab at the sealing part and to allow a part of the second electrode tab to be taken out to the outside of the sealed container.

16. The lithium secondary battery according to Claim 14, wherein the first direction and the second direction are the same direction.

17. The lithium secondary battery according to Claim 14, wherein the first direction and the second direction are directions different from each other.
